# EUROPEAN PATENT APPLICATION

(11) **EP 1 662 391 A2**
(43) Date of publication of application: **31.05.2006**
(21) Application number: 05014208.2
(22) Date of filing: 30.06.2005
(51) Int. Cl.: G06F 9/54

(54) **Integrated multi-agent system employing agents of different types**

(30) Priority: 23.09.2004 US 948391
(71) Applicant: Rockwell Automation Technologies, Inc., Mayfield Heights, OH 44124 (US)
(72) Inventor: Staron, Raymond J., Richmonds Heights OH 44143 (US); Hall, Kenwood H., Hudson OH 44236 (US); Maturana, Francisco P., Mayfield Heights OH 44124 (US); Masarykova, Pavel Tichy, Nymburk 28802 (CZ); Slechta, Petr, Ceska Lipa 47006 (CZ); Discenzo, Frederick M., Brecksville Ohio 44141 (US)
(74) Representative: Jung HML

(57) **Abstract**

A heterogeneous agent-based distributed control system for controlling a controlled system having a plurality of components is disclosed. The heterogeneous agent-based distributed control system includes one or more agent of a first type and one or more agents of a second type that communicate with one another by way of one or more networks or other communication links. The agents of the first and second types differ from one another in terms of one or both of their respective architectures and their respective responsibilities. The agents interact with one another in a collaborative manner, and communicate through the use of a special, standardized communications protocol and through the use of certain special functional components.

## Description

### CROSS-REFERENCE TO RELATED APPLICATIONS

This application is a continuation-in-part of U.S. patent application no. 10/939,004 filed September 10, 2004, which is based on U.S. provisional patent application no. 60/585,428 filed July 2, 2004, each of which is entitled "Energy Management System," also is a continuation-in-part of U.S. patent application no. 10/859,389 filed June 2, 2004, which is entitled "Autonomous Control Unit-Based Control System Capable of Active Diagnostics", also is a continuation-in-part of U.S. patent application no. 10/808,772 filed March 25, 2004 and entitled "Controller With Agent Functionality", and additionally is a continuation-in-part of U.S. patent application no. 10/737,384 filed on December 16, 2003 and entitled "Decentralized Autonomous Control for Complex Fluid Distribution Systems", which is based on provisional application no. 60/433,892 filed December 16, 2002 and entitled "Agent-Based Active Diagnostics System for Complex Distribution Networks", each of which is beneficially assigned to the present assignee and is hereby incorporated by reference herein, and claims the benefit thereof.

### STATEMENT REGARDING FEDERALLY SPONSORED RESEARCH OR DEVELOPMENT

--

### BACKGROUND OF THE INVENTION

The present invention relates to computerized control systems and, more particularly, to distributed control systems that employ multiple, distinct control devices that are connected to one another by way of a network and that interact with one another in a manner allowing for overall control of a process.

A variety of commercial and industrial processes can be automated using one or more discrete controllers or other control elements, such as industrial controllers. In a centralized model for control, a single central controller (e.g., a specialized computer) coordinates all aspects of the controlled process. Often, input signals representing values from sensors on the controlled process are communicated to the central controller, which executes a control program to develop output signals which are communicated to actuators on the controlled process.

The centralized model is conceptually simple and requires programming only a single device. Nevertheless, the centralized model has some disadvantages. Control systems using this model are particularly vulnerable to failure of the single central controller. Further, communication of all I/O signals to a central location and executing the control program on a single computer, particularly for large control systems, can place undue burdens on processing resources, computer memory and communication bandwidth. Additionally, a significant cost in automating a process (e.g., on an industrial controller) is the cost of preparing the control program. Often, a control program needs to be written specifically for or extensively modified for a given process, which can become prohibitively expensive for complex processes.

These disadvantages associated with the centralized control model have generated interest in an alternate control model, namely, the distributed control model. In the distributed model for control, the control program is executed by a number of spatially separate controllers intercommunicating only as needed on a common network. By placing these controllers near relevant controlled/monitored devices and/or relevant I/O points, the communication of large numbers of control/monitoring signals and/or large amounts of I/O data is diminished. Having multiple control devices can also reduce the susceptibility of the control system to failure of any one device. Nevertheless, difficulties remain with distributed control systems. In particular, it can be expensive and time-consuming to develop multiple control programs for the different controllers of a distributed control system to appropriately divide the control tasks among the various distributed controllers and coordinating their actions. In addition, changing one program in a distributed controller may have an unanticipated, adverse affect on another program operating in a different controller. Even though distributed systems are physically distributed, they are logically tightly coupled. Ripple effects caused by unknown or unexpected coupling can be difficult to diagnose and cause severe malfunction of controlled systems.

The problems related to developing control programs for such distributed control systems have spurred investigation of systems that employ multiple intelligent agents, which also can be termed agents or autonomous cooperative units (ACUs), at the various distributed controllers. In some such multi-agent systems (which also can be termed autonomous cooperative systems), a job description is presented to a large number of agents. The agents, based on knowledge of their own capabilities and limitations, bid on portions of the job in response to requests for bids from other agents. Effectively, the agents write their own program, such that control programs are simply developed and the potential exists for control programs to be quickly changed as new circumstances develop, such as changes in the control problem or the loss of particular agents and/or equipment. Such multi-agent systems are applicable to, and capable of adapting to, a wide variety of situations.

The agents of a conventional multi-agent system typically share a variety of characteristics in common with one another. In particular, the agents typically will share in common an architecture or infrastructure employing common hardware and firmware/software that is programmed by way of a common programming language, and which enables the agents to share in common certain capabilities such as those relating to bidding procedures. Thus, the agents of a conventional multi-agent system typically share a common agent typology. Yet this is not to say that all agents employed in different multi-agent systems are identical. Rather, a variety of different types of agents, having a variety of different architectures/infrastructures and capabilities/responsibilities, are possible. Whether a particular type of agent is implemented in a given multi-agent system typically will depend upon a variety of factors, such as the system that the multi-agent system is intended to control/monitor and the operational circumstances that the agents will face.

Given the great variety of systems that can be controlled/monitored by multi-agent systems and the many different operational circumstances in which multi-agent systems can be implemented, the type of agent that is employed in any given multi-agent system should be selected with care so that the agents are appropriate for the situation. Yet there are circumstances in which no particular multi-agent system employing multiple agents of a single type is capable of optimally addressing the situation that the multi-agent system is intended to address. For example, certain operational characteristics of a system that is to be controlled/monitored by a multi-agent system may be optimally addressed by agents of one type, while other operational characteristics of the system may be optimally addressed by agents of another type. That is, the demands of the system to be controlled/monitored by the multi-agent system can, in some sense, be contradictory or incompatible such that there is no single type of agent that is well-suited to meeting all of those different demands at all times.

Given that there exist systems and circumstances with respect to which conventional multi-agent systems employing a single type of agent are not optimally suited, it would be desirable if a new form of multi-agent system could be developed that would be more appropriate for controlling/monitoring such systems and/or operating under those circumstances. More particularly, it would be desirable if such new form of multi-agent system was capable of addressing the competing, contradictory or incompatible demands, and dynamic requirements, of a given system to be controlled/monitored by that multi-agent system. Further, it would be desirable if such new form of multi-agent system was not much more complicated to implement than conventional multi-agent systems.

### BRIEF SUMMARY OF THE INVENTION

The present inventors have recognized that, because different types of agents can have different architectures/infrastructures and consequently may have different capabilities and strengths, it is conceivable that a multi-agent system employing agents of multiple different types could better address the needs of some systems to be controlled/monitored. Such "heterogeneous agent systems" employing agents of different types could potentially improve upon multi-agent systems employing agents of only a single type insofar as such heterogeneous agent systems could potentially draw upon and combine the strengths of each of the different types of agents employed by the heterogeneous agent systems. At the same time, the present inventors have recognized that different forms of heterogeneous agent systems can vary not only in terms of the types of different agents that are employed in the heterogeneous agent systems, but also in terms of the responsibilities of the agents of the different types employed in those heterogeneous agent systems.

Further, the present inventors have recognized that, to facilitate the creation of heterogeneous agent systems having multiple different types of agents, it would be useful to develop technology for integrating different types of agents in a generic manner. In particular, given that different types of agents have different architectures/infrastructures, it would be useful if such generic integration technology could largely or entirely limit the burden of integrating different types of agents to the semantic level, and largely or entirely eliminate any difficulties associated with integrating different types of agents at the infrastructure level. That is, the present inventors have recognized that heterogeneous agent systems could be most effectively and simply implemented if the various agents of such systems shared certain standard characteristics despite being of different types, for example, characteristics relating to the communication protocols and/or communication transport stack by which the agents of the different types intercommunicate with one another, as well as certain functional components that the different agent types may share in common with one another.

In particular, the present invention relates to a heterogeneous agent-based distributed control system for controlling a controlled system having a plurality of components. The control system includes a first agent of a first type, a second agent of a second type, and a network linking the first and second agents. The first agent has a first responsibility and the second agent has a second responsibility, and the first and second agents collaborate with one another via communication over the network to control the controlled system.

Further, the present invention relates to a method of intercommunicating messages between a first agent of a first type and a second agent of a second type. The method includes developing a first message at the first agent of the first type, where the first message is formatted in accordance with first protocol information including at least one of JDL protocol information and FIPA ACL protocol information, further formatting the first message at the first agent with transport-layer protocol information, and additionally formatting the first message for communication over a network to include network protocol information. The method additionally includes sending the first message over the network to the second agent, receiving the first message at the second agent, and processing the first message at the second agent, where the processing of the first messages includes removal of the network protocol information, the transport-layer protocol information, and the first protocol information.

Additionally, the present invention relates to a system including a plurality of system components that are at least one of controllable and monitorable, at least one agent of a first type having a first architecture, at least one agent of a second type having a second architecture, and a network linking the at least one agent of the first type and the at least one agent of the second type. At least one of the agents of the first and second types is in communication with at least one of the system components to allow for at least one of sensing, controlling and monitoring of the system components.

Further, the present invention relates to a heterogeneous agent-based distributed control system for operating in relation to an additional system having a plurality of components. The control system includes a first agent of a first type, a second agent of a second type, and a network linking the first and second agents. The first agent has a first responsibility and the second agent has a second responsibility, and the first and second agents collaborate with one another via communication over the network to diagnose the additional system.

Additionally, the present invention relates to a heterogeneous agent-based distributed control system for operating in relation to an additional system having a plurality of components. The control system comprising a first agent of a first type, a second agent of a second type, and a network linking the first and second agents. The first agent has a first responsibility and the second agent has a second responsibility. Additionally, the first and second agents collaborate with one another via communication over the network to perform at least one prognosis in relation to the additional system.

### BRIEF DESCRIPTION OF THE DRAWINGS

FIG. 1 is a simplified perspective view of components of a generalized controlled system and an exemplary heterogeneous agent-based distributed control system such as can be used to control and/or monitor such a controlled system;

FIGS. 2(a)-2(i) show several exemplary configurations of heterogeneous agent-based distributed control systems in which, respectively, different agent types are associated with different geographical regions, functions, time periods, or hierarchical levels or are related with one another in other manners;

FIG. 3 is a schematic diagram showing aspects of the heterogeneous agent-based distributed control system of FIG. 1 in more detail, and particularly shows certain heterogeneous communication protocols and heterogeneous function components employed by the heterogeneous agent-based distributed control system;

FIG. 4 is a schematic diagram showing in more detail certain of the heterogeneous function components of FIG. 3;

FIG. 5 is a schematic diagram showing exemplary capabilities of two different types of agents employed in an exemplary heterogeneous agent-based distributed control system; and

FIG. 6 is a flowchart depicting exemplary steps of operation of an exemplary heterogeneous agent-based distributed control system employing agents of two different types such as those discussed with reference to FIG. 5.

### DETAILED DESCRIPTION OF THE PREFERRED EMBODIMENT

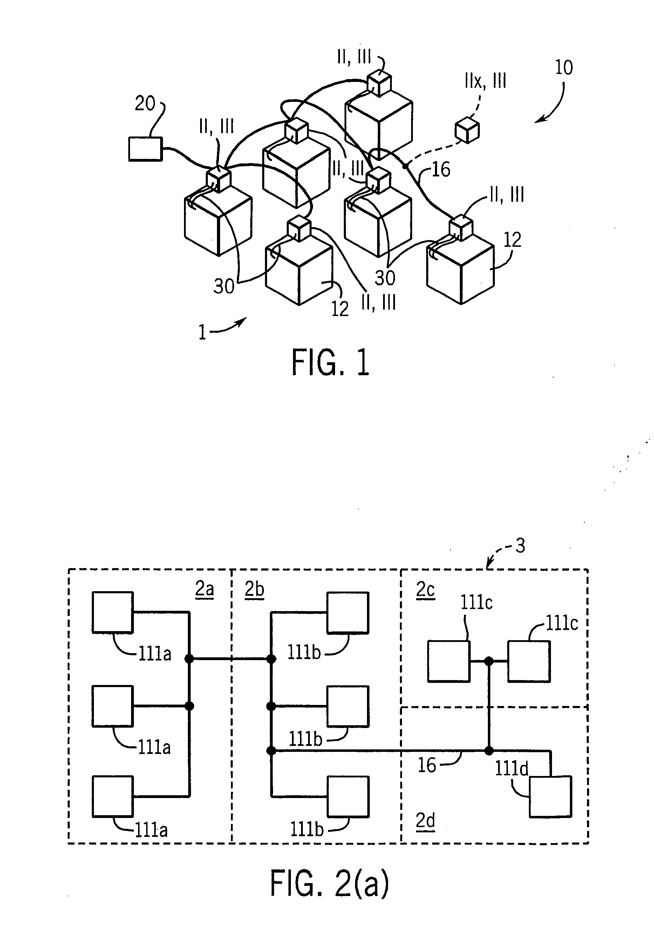

Referring to FIG. 1, a controlled system 1 encompassing multiple controlled devices or machines 12 is shown in generalized form. As shown, the system 1 is controlled by a heterogeneous agent-based distributed control system 10, also shown in generalized form. The controlled system 1 is intended to be generally representative of any of a variety of different systems that require control in a variety of environments including, for example, heating, cooling and ventilating (HVAC) systems, water (including plumbing/sewage) systems, energy-related (or power-related) systems including power generation and/or power storage and/or power distribution systems, communications systems, emergency warning systems, systems implemented in buildings, industrial systems, systems implemented in vehicles, etc. Further, the heterogeneous agent-based distributed control system 10 is intended to be generally representative of any of a variety of distributed control systems that implement multiple intelligent agents (or simply "agents", which can also be termed autonomous control units or "ACUs"), where two or more of the agents are of different types as discussed further below.

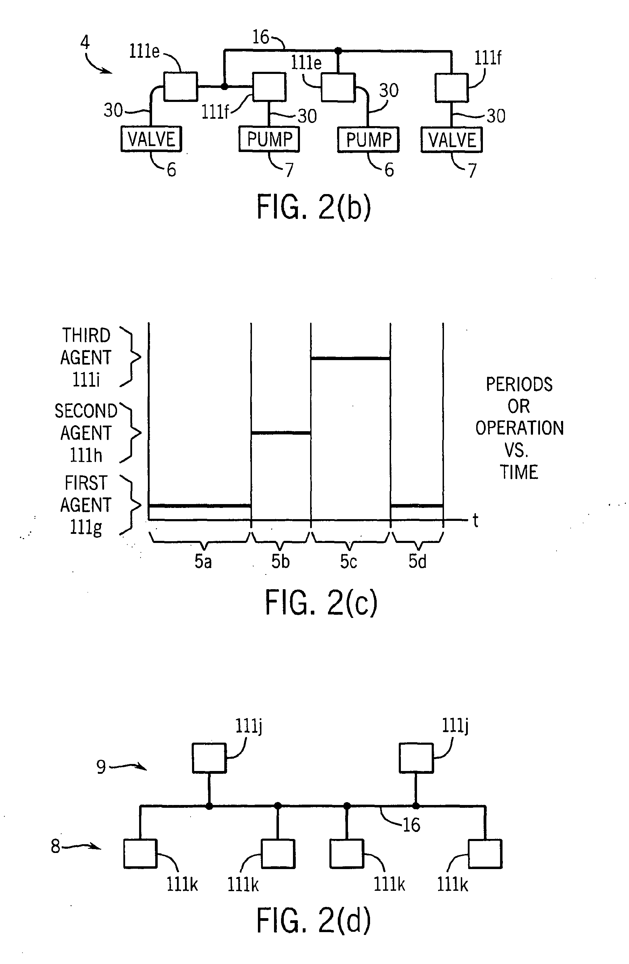

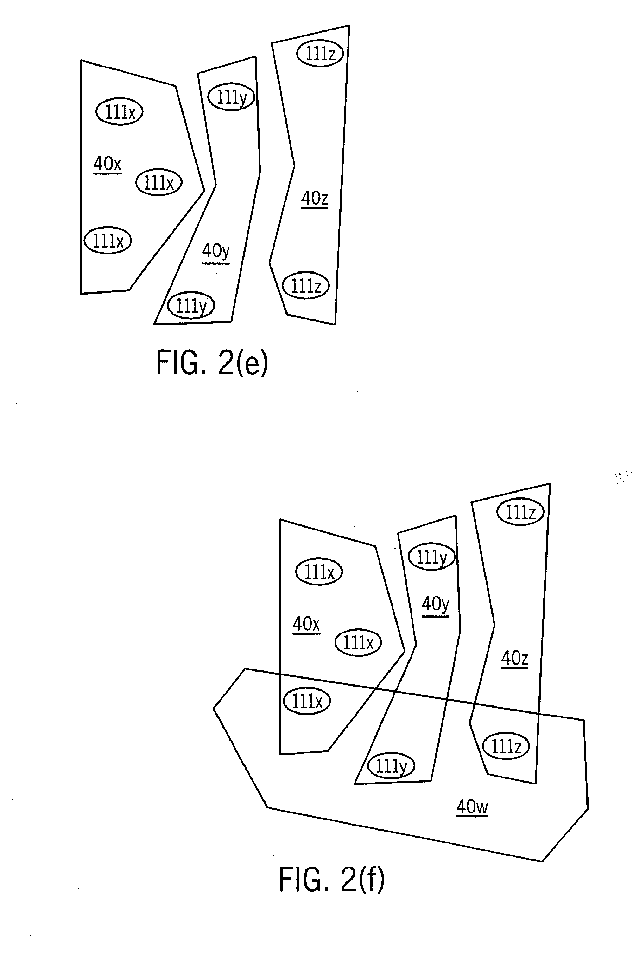

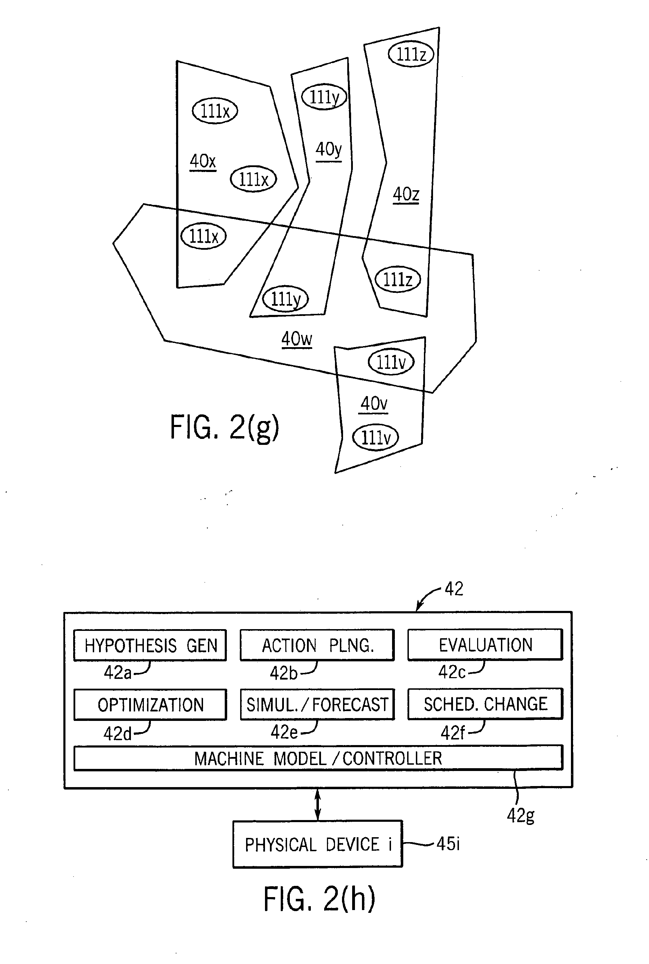

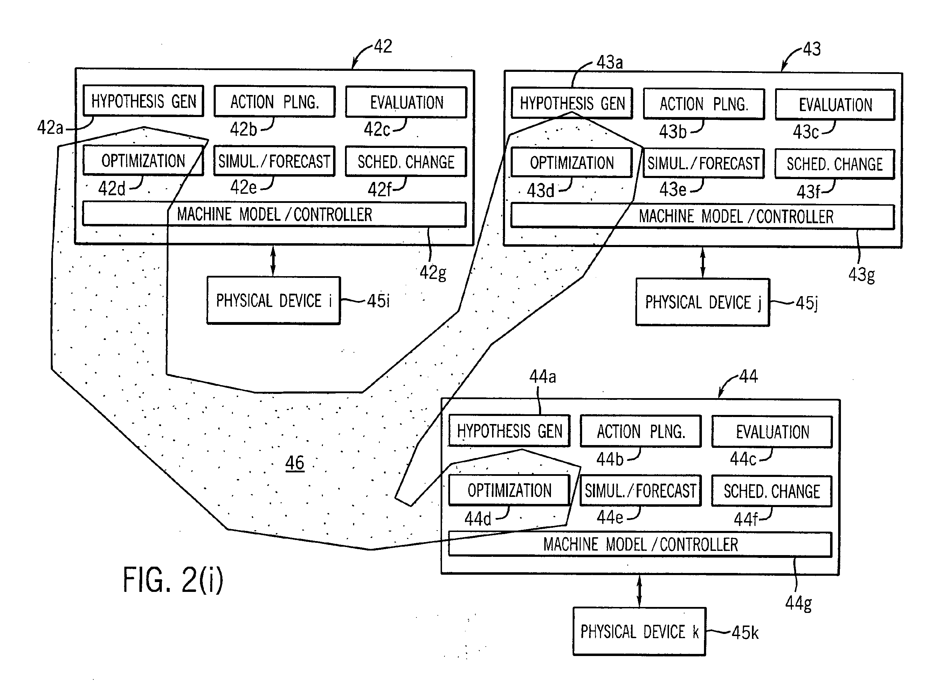

In the embodiment of FIG. 1, the heterogeneous agent-based distributed control system 10 in particular is shown to include a plurality of electronic computers or controllers 11. At least some of the controllers, in this case all of the controllers 11 other than a controller labeled 1 1x, are respectively associated with respective ones (or more than one) of the machines 12 of the controlled system 1. Such controllers are respectively configured for electrical communication through respective I/O line(s) 30 with their respective machine or machines 12, and typically the controllers are hardened, physically robust units. However, in some embodiments it is possible that one or more of the controllers, in this case represented by controller 11x, is/are not directly coupled to or associated with any particular one or more of the machines 12, but rather are coupled directly to others of the controllers. In certain embodiments, as discussed further with reference to FIG. 2, the various controllers 11 can be organized and coupled to one another to form a hierarchy of control elements or some other more complicated organization. The machines 12 shown in FIG. 1 also can be organized into a hierarchy to facilitate communication and agent interoperability.

The electronic controllers 11 are linked to each other via a network 16 of a type well known in the art allowing for connected messaging or other communication protocol between the various controllers 11 (including controller 11x), such that each of the controllers can produce messages for or consume messages from others of the controllers. In some embodiments, the network 16 is representative of multiple redundant networks or other communication linkages (which can be implemented using redundant network media or supplemental hardwired connections instead of or in addition to a wired or wireless network) to resist failure. Multiple different networks and access paths can be deployed in a single system providing for redundancy and reliability, or survivability, or maximum performance, or lowest installation cost, for example.

In some embodiments, the controllers 11 (including 11x) can be ControlLogix or FlexLogix programmable control modules commercially available from Rockwell Automation, Inc. of Milwaukee, Wisconsin, the beneficial assignee of the present invention. However, in alternate embodiments the controllers can take other forms, for example, personal computers, microprocessors, microcomputers, embedded computers, or other computing devices (e.g., handheld computer devices, palm computers, or organizers). Also, in certain embodiments, a heterogeneous mix of agents can also be deployed in which the various agents employ a mix of different controller embodiments such as those discussed above. Further, the network 16 can be a wired or wireless network of any of a variety of types, for example, an Ethernet, ControlNet or DeviceNet-type network, the internet, a power-line based network such as an X10-type network, a wireless network involving RF, Bluetooth, 802.11b, IEEE 802.15.4, or cell phone-type technology, or networks employing infrared, acoustic, microwave, free-space optical networks, sensor networks (e.g. AS-I and Intellibus), or fiber-optics technologies.

A human machine interface HMI 20, being a conventional computer terminal or other similar device, can be attached to the network 16 or to one or more of the controllers 11 by way of a network such as the network types referenced above (wireless and wire-line) to allow for programming of the various controllers, setting controller, sensor, or actuator parameters, programming the system, or for other data entry, system monitoring and analysis, system controlling or system debugging purposes, for example as discussed in U.S. patent application no. 10/808,999 filed March 25, 2004, which is based on U.S. provisional patent application no. 60/553,360 filed March 15, 2004, each of which is entitled "Agent Program Environment"; and U.S. patent application no. 10/814,549 filed March 31, 2004 and entitled "System and Method for Interfacing Multi-Agent System", each of which is beneficially assigned to the present assignee and hereby incorporated by reference herein.

In certain embodiments, the HMI 20 can exist remotely from the controllers 11 and be coupled to the network 16 by way of an external communication medium including, for example, the world wide web or internet or radio frequency broadcast or satellite (not shown). In such embodiments involving the internet, the HMI 20 can employ a browser program while one or more of the controllers 11 employ a server program, or vice-versa. In some alternate embodiments, the HMI 20 or human-machine interfaces like it could be implemented by some of the machines 12. Also, depending upon the embodiment, defined HMI functions can be operated by a human operator and/or another machine. Multiple HMIs could exist for convenience (located in areas of most critical need), for redundancy, or for providing multiple views or windows into the system.

As mentioned above, the controllers 11 (including 11 x) of the heterogeneous agent-based distributed control system 10 each operate as one or more agents 111, such that the control system as a whole operates as a multi-agent system (or "MAS"). Each agent 111 is an autonomous cooperative unit that encapsulates application knowledge, and is capable of autonomous, proactive, reactive, and social behaviors in relation to the other agents of the control system 10 to adapt the control system to different tasks and to adjust in response to the occurrence of a variety of operational conditions (often unforeseen) in relation to operation of the controlled system 1. More particularly, each agent 111 is autonomous such that it makes its own decisions, and is responsible for carrying out its decisions toward successful completion. Where the agent is implemented in association with particular machine(s) 12, the agent controls and/or monitors the respective machine(s) 12 assigned to it. The agents 111 possess local control to meet mission objectives and to realize goals. Also, each agent 111 is capable of cooperating with other agents, and capable of adapting and responding to diverse and changing events and mission goals (as well as changing contexts such as energy operation or test operation or normal non-critical operation) by adjusting its behavior and that of the machine(s) 12 it controls. As discussed in further detail below, to allow for cooperation among agents 111, the agents are able to communicate with one another and are interoperable. Often, such cooperation is achieved by way of bidding among the agents.

Depending upon the embodiment, either one or more than one agent can be employed on each of the controllers 11 (including 11x), although in the embodiment shown in FIG. 1 there is one agent 111 associated with each controller. Often, although not necessarily, the number of agents implemented on a given one of the controllers will correspond to the number of machines 12 that are being controlled by way of that controller. In certain embodiments, to accommodate highly critical machines or complex machines, multiple agents can be deployed to oversee and control the operation of a single complex or critical machine. For example, one implementation of multiple agents for a single machine would include a "hot" image or shadow of the operating agent. In a complex implementation required functions can be decomposed to allow separate cooperating agents for a single machine to perform control, simulation, diagnostics, prognostics, cost /economic analysis, and risk assessment.

Also, in certain embodiments the agents are fault tolerant, particularly in embodiments where it is desired that the agents be capable of detecting failures or anomalies that occur in the controlled system 1, and/or that the agents be capable of isolating those failures/anomalies to prevent those failures/anomalies from propagating to other system components or at least limiting the impact of such failures/anomalies. Also, preferably the agents are proactive and periodically (typically asynchronously) propose and implement strategies to enhance system performance or to reduce the likelihood that the system will enter undesirable states when emergencies occur. In certain embodiments, agents can collaborate to establish a strategy and execute the strategy to actively "probe" the system to confirm proper operation, healthy systems components or explore "what-if" scenarios.

For example, a probing command could be to slightly close a valve and record a corresponding time-based change in pressure and flow to confirm proper actuation and that the valve step and body are intact. This would be done before the system entered a critical state and proper valve operation was required to avoid a failure or process upset. To carry out if-then scenario evaluation, hybrid intelligent systems would sometimes be more suitable because these would allow the incorporation of high-level decision making agents, which do not fit perfectly in the device level due to space and timing requirements, but in the information processing level. In additional embodiments, agents can possess predictive or prognostic capabilities. These permit agents to change their functions, or to change their performance based upon the likelihood of a failure of one or more degraded components.

The agents 111 employed in the controllers 11 (including 11x) can take a variety of forms in terms of their internal components, and need not share the same internal structure, both in terms of software/firmware and hardware. That is, a variety of different types of agents having different architectures (e.g., in terms of software programming/components, firmware, hardware components, syntax, semantics, programming language, computing platform and operating system) and/or responsibilities/capabilities are currently available or under development. One exemplary type of agent is the "Rockwell-type agent" developed by Rockwell Automation, Inc. of Milwaukee, Wisconsin, the beneficial assignee of the present invention, the characteristics of which are described in more detail in U.S. patent application no. 10/939,004 filed September 10, 2004, which is based on U.S. provisional patent application no. 60/585,428 filed July 2, 2004, each of which is entitled "Energy Management System" and hereby incorporated by reference herein. Such Rockwell-type agents are typically programmed using the C++ programming language and are implemented on the aforementioned ControlLogix or FlexLogix programmable control modules, although they can also be implemented on other systems such as Windows XP workstations.

A second exemplary type of agent is the "JADE-type" agent employing a software framework fully implemented in Java language and is distributed by TILAB (Telecom Italia Lab). A third exemplary type of agent is the "Jack type" agent developed by The Agent Oriented Software Group (AOS). A fourth exemplary type of agent is the "April type" agent, which is based upon the Agent Process Interaction Language (April) developed by Francis G. McCabe and Keith L. Clark at Imperial College in London. Further, a fifth exemplary type of agent is the "ABLE type" agent developed by IBM Corp. of Armonk, New York. Additionally, a sixth exemplary type of agent is the Open Autonomy Kernel or "OAK-type" agent developed by the Johns Hopkins University Applied Physics Laboratory. Such agents are typically programmed using the JAVA programming language and are implemented on Linux workstations and PCs. These six agent types are not intended to be exhaustive of all existing or possible agent types, but rather are merely intended to be a representative sampling of different agent types.

Each of these different types of agents in fact constitutes an agent as set forth above, particularly insofar as each of these agents is capable of operating in a manner that is autonomous and cooperative. Yet each of these different types of agents is of a different "type" insofar as the different types of agents have different architectures/infrastructures. The architectures/infrastructures of the different types of agents can vary in a number of manners, particularly in terms of one or more of their hardware (e.g., the computer host), firmware, operating system and software, as well as in terms of the programming language(s) used to program the software/firmware/operating system. Due to their varying architectures/infrastructures, the different types of agents have different operational characteristics and can have different functional capabilities, strengths, timing characteristics, etc. such that it is appropriate to give the different types of agents different responsibilities.

For example, the Rockwell-type agents were developed for implementation on programmable logic controllers (PLCs) for use in industrial automation environments for controlling manufacturing machinery such as valves, pumps, motors and the like. Consequently, Rockwell-type agents are particularly adept at communicating with, monitoring and controlling such machinery, and also are designed to provide particularly robust, fault-tolerant and reliable operation. In contrast, some of the other types of agents such as the Jack-type, JADE-type and Oak-type agents for example are particularly designed to handle difficult control problems that involve complicated systems, some of which may only be partly observable. It is possible and in some circumstances can be desirable to employ a hybrid agent that encompasses characteristics from two or more agent types or a close-coupling of two or more agent types to perform a specific control function. Multiple agent types can also prescribe different control or operating conditions and a voting scheme can be used to select the most appropriate strategy or most competent agent type for the current configuration, operating condition, or system context. For example, in the case of agents employed on a naval vessel, one agent type could be more appropriate for a battle state condition than for a normal cruise state condition.

As discussed in the Background of the Invention, given the different capabilities and strengths of different types of agents, there are circumstances in which it would be desirable for an agent-based distributed control system to take the form of a heterogeneous agent-based distributed control system, such as the control system 10, in which the control system is formed from agents of two or more different types. To successfully implement a heterogeneous agent-based distributed control system such as the control system 10 employing different types of agents, it is necessary to address multiple considerations. First, it is necessary to determine the different roles that the different types of agents will play in the operation of the heterogeneous agent-based distributed control system. Indeed, typically the reason that a heterogeneous agent-based distributed control system is desirable is that agents of different types can take on different responsibilities that are best suited for the different agents in terms of their capabilities and strengths.

Second, it is necessary to assure that, despite the architectural and operational differences among the different types of agents, the different types of agents are nevertheless capable of communicating and interacting with one another. Thus, as discussed in more detail below, the present invention in certain embodiments is intended to facilitate the creation of such heterogeneous agent-based distributed control systems that employ two or more different types of agents by providing interfacing technology that allows for the different types of agents to interface one another in a generic manner. In particular, the present invention in such embodiments entirely or largely limits the burden of integrating different types of agents to the semantic level and entirely or largely eliminates issues of integration at the infrastructure level, even though the different types of agents may have a variety of different types of architectures/infrastructures and be linked by a variety of different types of networks.

Third, in certain embodiments or operational circumstances, it is possible that there will be changes in the mission(s), context, system dynamics, and other aspects of the operation and role of the heterogeneous agent-based distributed control system 10. In such embodiments, it is important that the suite of agents deployed in the heterogeneous agent-based distributed control system 10 remain appropriate in spite of changes in mission, context, system dynamics (including system evolution in time) and other aspects of the operation and role of the control system.

Turning to FIGS. 2(a)-2(i), the different responsibilities assigned to different types of agents in a heterogeneous agent-based distributed control system such as the control system 10 can be allocated in many different ways depending upon the embodiment (albeit the division of responsibilities can also be allocated in other ways as well). First, with reference to FIG. 2(a), different types of agents can be assigned different responsibilities based solely upon where geographically the different agents are located in a given region. Thus, as shown, first, second, third and fourth different types of agents 111a,111b,111c and 111d could be implemented in first, second, third and fourth sections 2a,2b,2c and 2d of a region 3, respectively. Second, with reference to FIG. 2(b), different types of agents could be assigned different responsibilities in terms of their specific control or monitoring functions. Thus, as shown, in one embodiment, first and second different types of agents 111e and 111f could be implemented respectively for controlling the operation of valves 6 and pumps 7 of a water system 4.

Third, with reference to FIG. 2(c), different types of agents in certain embodiments could be assigned different responsibilities temporally, e.g., in terms of the different times at which the agents are active or perform various functions. Thus, as shown schematically in FIG. 2(c), first, second and third different types of, agents 111g, 111h and 111i are operational at times 5a, 5b and 5c, respectively. Fourth, with reference to FIG. 2(d), in still additional embodiments different types of agents could be assigned different levels of responsibilities within a hierarchy of agent responsibilities. Thus, as shown in FIG. 2(d), agents 111k of a first type are assigned to a lower-level of responsibility 8, which for example might involve directly controlling valves 6 or pumps 7, while agents 111 j of a second type are assigned to a higher-level of responsibility 9 that involves management of the lower level agents 111k. Although FIG. 2(d) shows a two-level hierarchy in which only the lower-level agents 111 k are directly coupled to elements of the controlled system, in alternate embodiments, hierarchies of agents having three or more levels and/or hierarchies in which agents at more than one level directly interact with the controlled system are possible.

There are other criteria that can also be used to assign responsibilities to agents instead of or in addition to those detailed above. FIG. 2(e) for example shows generic agent responsibility groupings 40x, 40y and 40z of lower level agents 111x, 111y, and 111z, respectively. Such groupings of agents can be determined, for example, based upon their dynamic response requirements. Further for example, one grouping such as the grouping 40x can include agents 111x that respond within a few milliseconds, while another of the groupings such as the grouping 40y can include agents 111y that respond within seconds, while still another of the groupings such as the grouping 40z can include agents 111z that provide planning on a time horizon of hours. Alternatively, for example, the groupings 40x, 40y and 40z could be determined based upon the sequential order of control or the sequential order of reorganization. Further for example, the agents (e.g., the agents 11 x) in one of the groupings (e.g., the grouping 40x) might have to complete a control change or a reorganization action before responsibility would transfer to the agents (e.g., the agents 111y or 111z) of another of the groupings (e.g., to either of the groupings 40y or 40z).

Still other exemplary responsibility groupings could be determined based upon criticality of operation. For example, one of the groupings (e.g., the grouping 40x) could include agents (e.g., the agents 111x) whose operations were critical for mission, plant, or ship (or other entity) survival, while the agents (e.g., the agents 111y) of another of the groupings (e.g., the grouping 40y) could be employed for information support or auxiliary services. Further for example, the agents (e.g., the agents 111x) of one of the groupings (e.g., the grouping 40x) could be responsible for safety critical responsibilities while the agents (e.g., the agents 111y or 111z) of other groupings (e.g., the groupings 40y and/or 40z) could be responsible for less safety critical systems.

Additional responsibility groupings could also in some embodiments be determined based upon security levels. For example, a first set of agent responsibilities could be only assigned to a first grouping (e.g., the grouping 40x) of agents (e.g., the agents 111x) based upon the need to maintain segregation or a firewall between those agents and the agents (e.g., the agents 111y and/or 111z) of other less secure or perhaps unknown agent groupings (e.g., the groupings 40y and/or 40z). Lastly, responsibility groupings in some embodiments could be determined based upon the maturity or confidence in agents providing core capabilities. For example, a first grouping (e.g., the grouping 40x) of agents (e.g., the agents 111x) having more risky, less tested, or less mature capabilities could be segregated from other groupings (e.g., the groupings 40y and/or 40z) of agents (e.g., the agents 111 y and/or 111 z) with less risky, more tested, or more mature capabilities, such that the first grouping had responsibilities that differed from those of the other groupings.

Referring next to FIG. 2(f), it is also possible in certain embodiments for any given agent to be a member of multiple groupings concurrently. For example, one of the agents 111x, 111y, and 111z of each of the first, second and third groupings 40x, 40y and 40z, respectively, could be included within a fourth grouping 40w. Further for example, one grouping (e.g., the grouping 40x) might be determined based upon functional responsibilities, while another of the groupings (e.g., the grouping 40w) might be determined based upon the security of the agent responsibilities. Thus, in one exemplary embodiment along these lines, one or more (but not all) of the agents of the one grouping might also be members of the other grouping.

Referring to FIG. 2(g), it is also possible for a particular agent to be logically associated with multiple responsibility groupings, where one or more of the responsibility groupings are comprised of different agent types. For example, as shown in FIG. 2(g), one of the agents 111 x of the grouping 40x could be associated not only with the other agents 111x of the grouping 40x but also with one of the agents 111 y of the grouping 40y, one of the agents 111z of the grouping 40z, and one of the agents 111 v of an additional grouping 40v, within the responsibility grouping 40w. Thus, one of the agents of each of the groupings 40v, 40x, 40y, and 40z would be logically associated with one another in the form of the grouping 40w, which would be comprised of agents of different types. This concept partially defines the agent cluster that is required for these dynamic associations.

Referring to FIG. 2(h), in certain additional embodiments it is possible for different responsibilities to be assigned to different agent types that work together to control/monitor a single entity or machine. In the example of FIG. 2(h) in particular, multiple agents 42 of different types (e.g., 42a-42g) collaborate to realize superior control of a specific device 45i. Further referring to FIG. 2(i), a responsibility grouping can be established that encompasses the same function from a logically related collection of devices. For example, as shown, a grouping 46 of similar agent types such as for optimization (e.g., agents 42d, 43d and 44d) can be established. This example shows that while the operation of the device 45i (which could be, for example, a motor) can be optimized through the operation of the set of agents 42a-42g, several agents having similar responsibilities associated with not only the device 45i but also other similar devices such as devices 45j and 5k can also collaborate to insure a more global or overall high value solution.

Further, in additional embodiments it would be possible to create heterogeneous agent-based distributed control systems in which responsibilities among different types of agents are allocated in more than one of the ways discussed with reference to FIGS. 2(a)-2(i). For example, it would be possible to create heterogeneous agent-based distributed control systems in which the responsibilities of different types of agents were divided according to more than one of geographical, functional, temporal or hierarchical lines. Further, in certain embodiments, the responsibility groupings/assignments of agents can dynamically change (e.g., in time) based on changes in equipment or mission or based upon a variety of other factors such as, for example, operating priorities, adaptation/ learning, or reconfiguration changes.

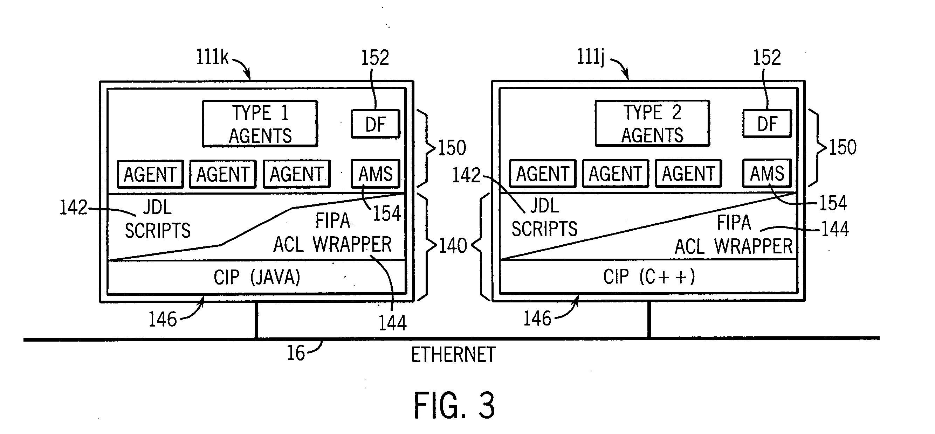

Turning to FIG. 3, in accordance with one embodiment of the present invention, the agents of different types of the heterogeneous agent-based distributed control system 10 are able to intercommunicate and interoperate with one another by way of heterogeneous communication protocols 140 and heterogeneous function components 150. As a result of these protocols 140 and function components 150, agent interoperation involving bidding, management and other activities becomes possible among the agents of different types. FIG. 3 in particular shows two types of agents, namely, agents of the two types 111j and 111k of FIG.'2(d), that are in communication and interoperate with one another, via the network 16 (which in this embodiment is an Ethernet network) by way of the heterogeneous communication protocols 140 and heterogeneous function components 150. Nevertheless, the heterogeneous communication protocols 140 and function components 150 could also be employed in heterogeneous agent-based distributed control systems having more than two different types of agents, and also could be employed with respect to different types of agents regardless of their type or whether those agents have been assigned responsibilities along the lines shown in FIG. 2(a), FIG. 2(b), FIG. 2(c), FIG. 2(d), FIG. 2(e), FIG. 2(f), FIG. 2(g), FIG. 2(h), and/or FIG. 2(i) and/or in some other manner.

More specifically, as shown in FIG. 3, messages between the agents of different types 111j, 111 k are scripts that have been written in the job description language (JDL) 142, and wrapped in additional formatting information 144 in accordance with a specialized, internationally-accepted communication language, which in the present embodiment is the Foundation for Intelligent Physical Agents (FIPA) Agent Communication Language (ACL). In the case of a Rockwell-type agent, the FIPA ACL formatting information 144 and JDL scripts 142 are generated, read, and processed by DCA infrastructure firmware (not shown), which processes the received messages to unwrap the JDL information of the messages from the FIPA ACL wrapper and then extract the content of the JDL messages. Likewise, in Rockwell-type agents, it is the DCA infrastructure firmware that creates agent messages in the JDL language, and wraps those messages in the FIPA ACL wrapper prior to transmission. Such DCA infrastructure firmware typically is programmed using the C++ programming language, as shown with respect to the agent 111j. In other types of agents, the processing of JDL content and wrapping/unwrapping of such JDL information with respect to FIPA ACL wrapper information can occur by way of other software/firmware/hardware in such agents, for example software/firmware written in the JAVA programming language as shown in FIG. 3 with respect to the agent 111k.

In alternate embodiments, the communication of information between the agents 111j, 111k of different types can occur by way of other languages/wrappers than through the use of the JDL scripts 142 and FIPA ACL formatting information 144. For example, the messages between agents could be in any of a number of other formats or languages other than JDL, such as XML, KQML or HTML. Also, in alternate embodiments, formatting/protocol information other than FIPA ACL could be employed as a wrapper about the messages. Further information regarding languages/protocols used for communication among agents is provided in U.S. Patent 6,647,300 entitled: Bidding Partner Cache For Autonomous Cooperative Control System; U.S. Patent 6,459,944 entitled: Self-Organizing Industrial Control System Using A Specific Process To Evaluate Bids; U.S. Patent 6,430,454 entitled: Self-Organizing Industrial Control System Using Iterative Reverse Modeling To Evaluate Bids; U.S. Patent 6,272,391 entitled: Self Organizing Industrial Control System Importing Neighbor Constraint Ranges; and U.S. Patent Application Publication No. 2003/0078678A1 entitled: Language Structure For Autonomous Cooperative Control System, each beneficially assigned to the present assignee and hereby incorporated by reference.

The JDL and FIPA ACL languages/protocols are semantic-layer protocols, and are not the only heterogeneous communication protocols 140 employed to allow intercommunication among the two types of agents 111j, 111k. As further shown in FIG. 3, an additional, transport-layer protocol 146 is added onto outgoing messages (after the addition of the JDL and FIPA ACL information) before the messages are transmitted onto the network 16, and likewise is removed from incoming messages before processing of the underlying information. In at least one embodiment of the present invention, the transport-layer protocol 146 is the Common Industrial Protocol (CIP). Thus, the communication transport stack of each of the agents of the first and second types 111 j, 111 k is based upon the CIP, and includes a respective library of messages that are written in JDL with FIPA ACL formatting information by way of software/firmware written in the JAVA language, the C++ language, or some other language. The library of messages in at least some embodiments is a standard, reusable library (or multiple such libraries) that can be generically used with many different embodiments of heterogeneous agent-based distributed control systems such as the control system 10, and thus supplement the use of JDL, FIPA ACL and CIP in providing an overall interface technology that allows for generically integrating a variety of different types of agents.

Still referring to FIG. 3, in addition to employing the shared heterogeneous communication protocols 140 as set forth above, interoperation of the agents of different types 111j, 111k is also made possible by the existence of the heterogeneous function components 150. As shown, these components 150, which are utilized by both the agents of the first type 111k and the agents of the second type 111j, include one or more directory facilitators (DFs) 152 and one or more agent management services (AMS) components 154. The DFs 152 are resource locators by which the agents 111j, 111 k are provided with information about each other and about other agents of the heterogeneous agent-based distributed control system 10, about their capabilities and/or the capabilities of the machines 12 with which those agents are associated, and how to locate those agents. In certain embodiments, the DFs 152 are implemented as subcomponents within the respective agents 111j, 111k, while in other embodiments the DFs are implemented as stand-alone entities or even additional agents (as shown in FIG. 3).

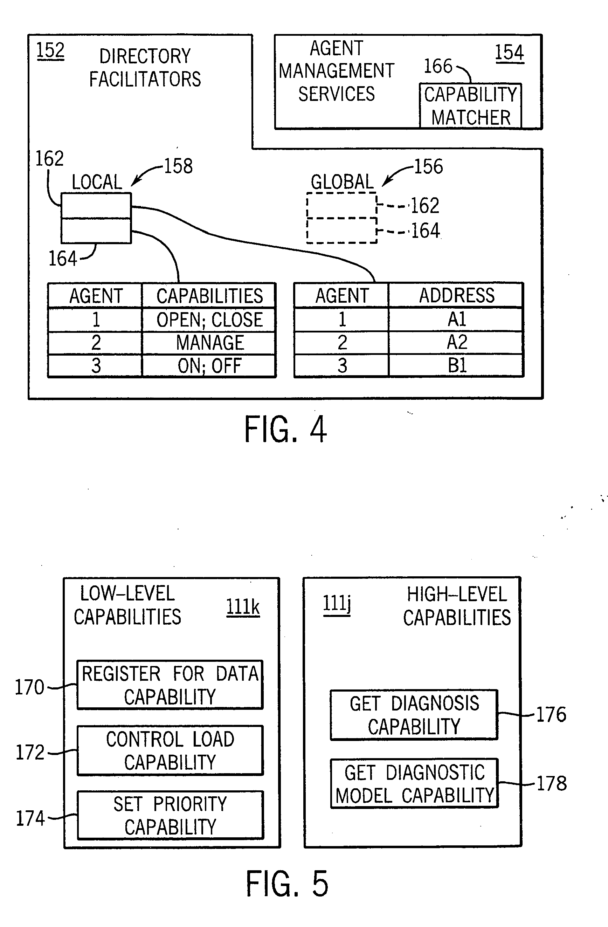

Referring additionally to FIG. 4, the DFs 152 can include one or more global directory facilitators (GDFs) 156 and/or one or more local directory facilitators (LDFs) 158. The LDFs 158 generally store information that is of interest to the particular controller(s) or agent(s) with which the LDFs are respectively associated, while the GDF(s) 156 generally store information that is of interest to the entire heterogeneous agent-based distributed control system 10 or at least to sections of the control system that encompass multiple LDFs 158. In some embodiments, an LDF 158 exists at each of the controllers/agents while GDFs 156 exist only at a lesser number of locations. Since each controller typically has its own LDF 158 but not its own GDF 156, the GDF shown in FIG. 4 is shown by way of a dashed line. In alternate embodiments, more than one GDF 156 can be employed at one or more of the controllers or more than two-levels of DFs 152 can be employed.

Since the GDF(s) 156 typically serve more than one of the agents, the GDF(s) serve as a central clearinghouse of agent-related information that can be selectively downloaded to the multiple LDFs 158 associated with the multiple agents of the control system. Typically, when the agents are initialized during development or deployment (or when a new agent is spawned or initialized or realized), each agent emits a registration message to a corresponding LDF 158. The LDF 158 in turn registers the new agent in the corresponding GDF 156 so that the information can later be used to match bids/requests with the capabilities of agents. Further description of LDFs and GDFs is provided in U.S. patent application no. 09/621,718 entitled "Global Resource Locator for Autonomous Cooperative Control Systems", which is beneficially assigned to the present assignee and hereby incorporated by reference.

Further as shown in FIG. 4, in certain embodiments each of the DFs 152 includes a first, "white pages" portion 162 and a second, "yellow pages" portion 164. The first portion 162 of each of the DFs 152 specifically includes information correlating the names/identities of different agents that exist within the control system 10 (even, possibly, agents that are in external organizations) with addresses/locations of those agents. This information allows the agents to properly direct messages intended for specific agents to the addresses of those agents. For example, the first "white pages" portion 162 of the LDF 158 shown in FIG. 4 shows three agents having three addresses.

The second portion 164 of each of the DFs 152, in contrast, includes information about the capabilities of the different agents that exist within the control system 10 (or even, possibly, agents that are in external organizations) and/or the machines 12 of the controlled system 1 (or external entities) with which those agents are associated. Thus, when an agent desires to find agents that are capable of providing certain services, the agent is able to consult the second portion 164 to identify such agents. An example of the information contained in the second, "yellow pages" portion 164 of the LDF 158 shown in FIG. 4 shows three agents having capabilities corresponding to the machines 12 that are controlled/monitored by those agents.

The Agent Management Services (AMS) components 154 operate in conjunction with the DFs 152. In particular, the AMS components 154 include capability matchers 166 that monitor communication patterns among different agents and identify, by way of learning protocols, groups of agents or "communication clusters" that frequently communicate with one another in certain contexts, for example, to address certain issues that repeatedly occur (e.g., repeating trends in energy consumption), or for other reasons. Where communication clusters are identified by a capability matcher 166, the capability matcher modifies the information stored within the LDFs 158 or GDFs 156 in a manner such that the agents follow special context coordination protocols when certain circumstances arise or in certain contexts, for example, the ContractNet protocol. In certain embodiments, libraries are included to encapsulate agent-level messages into industrially-accepted packets of information to be transmitted through industrial networks, and to allow for loosely-coupled distribution of information and responsibilities.

By operating in accordance with such protocols, the agents tend to modify their communication and negotiation behavior in ways that result in a reduction in the number of signals that are sent among agents and processed. This in turn reduces the amount of communication that occurs among the agents and increases the speed of collaborative decision making among the agents. For example, in certain embodiments, upon identifying a communication cluster associated with a particular operational context, the capability matcher 166 will store only the addresses of certain agents of the communication cluster in one or more of the DFs 152 (or caches associated therewith). Consequently, agents operating in accordance with context coordination protocols will tend to contact or communicate only with other agents in that communication cluster and ignore agents outside the cluster.

The operation of the capability matcher 166 in identifying appropriate communication clusters is based upon historic behavior of the agents of the control system 10, and is continually updated as the control system continues to operate. That is, the capability matcher 166 is coristantly analyzing agent interactions to determine preferred communication and collaboration patterns among the agents to address various process issues, to identify new communication clusters and modify previously identified communication clusters. As the capability matcher 166 identifies new patterns and changes in old patterns, it modifies the information stored in the GDFs/LDFs 156,158 so as to conform to these evolving patterns. In certain embodiments, it is presumed that communication cluster information is only accurate for a limited period of time, and consequently information corresponding to certain communication clusters is only retained in the GDFs/LDFs for such limited amounts of time and then deleted (e.g., upon the expiration of timers).

The exact amount and types of communication among the LDF(s) 158 and GDF(s) 156 can vary depending upon the particular characteristics of the heterogeneous agent-based distributed control system 10, the types of agents that form the heterogeneous agent-based distributed control system, and the controlled system 1 itself. In certain embodiments, the LDF(s) 158 regularly communicate with the GDF(s) 156 and provide information thereto, by way of a periodic, "heart-beating" signal or "sanity" check. By providing such regular communications between the LDF(s) 158 and the GDF(s) 156, the robustness of the system is increased. In other embodiments, the LDF(s) 158 communicate with the GDF(s) 156 on an asynchronous basis, e.g., only when relevant data is received by the LDF(s) that should be transmitted to the GDF(s) and when data from the GDF(s) is needed by the LDF(s). It should be noted that, while an architecture employing a two-level structure of DFs 152 (the LDFs 158 and the GDFs 156) is discussed in particular herein, other architectures employing only one-level of directory facilitators or more than two levels of directory facilitators can also be utilized depending upon the embodiment.

When new agents are created, agent address and capability information is first provided to the LDF(s) 158 corresponding to those agents. Further, in some embodiments, the agents (e.g., as part of the AMS) include logic allowing agents to perform "sanity" checks on new and/or foreign agents that are coming on line or newly being added to the heterogeneous agent-based distributed control system. Although it may typically be the case that agents presume.one another to be accurate, credible and reliable, in certain embodiments this may not be the case and, indeed, if an agent is suspected of being errant or hostile, one or more agents can notify each other of this potential problem. Also, in some embodiments, the various agents are generally capable of performing self-monitoring functions regarding their own operation and that of the agent-based distributed control system as a whole (and the agents can have architectural features designed to facilitate this). Such self-monitoring functions can broadly encompass any of a range of diagnostic, prognostic, health, security and other monitoring-related functions, as well as control and adaptive functionality that allows the agents to make adjustments in their behavior and that of the overall agent-based distributed control system in response to detected, diagnosed, and/or predicted events or conditions, or otherwise.

The degree to which the information concerning new agents is passed from those LDF(s) corresponding to the new agents to the GDF(s) 156 and/or to other LDF(s) can vary depending upon the embodiment, and in particular can depend upon whether the DFs 152 are programmed to perform breadth propagation, depth propagation or no-knowledge propagation. LDF(s) 158 employing the breadth propagation technique automatically communicate information regarding new agents to the GDF(s) 156 above them, and no further communication takes place. In the case of depth propagation, LDF(s) 158 communicate information to their corresponding GDF(s) 156, which in turn communicate that information to all of the other LDFs and/or GDFs of the distributed control system. As for no-knowledge propagation, this refers to behavior in which the LDF(s) 158 receiving new information do not pass that information on to any other DFs 152. Then, when a search is requested of a LDF 158 following no-knowledge propagation, the search is first processed locally at that LDF and then, if the LDF lacks appropriate information, the search is then passed on to other DFs 152.

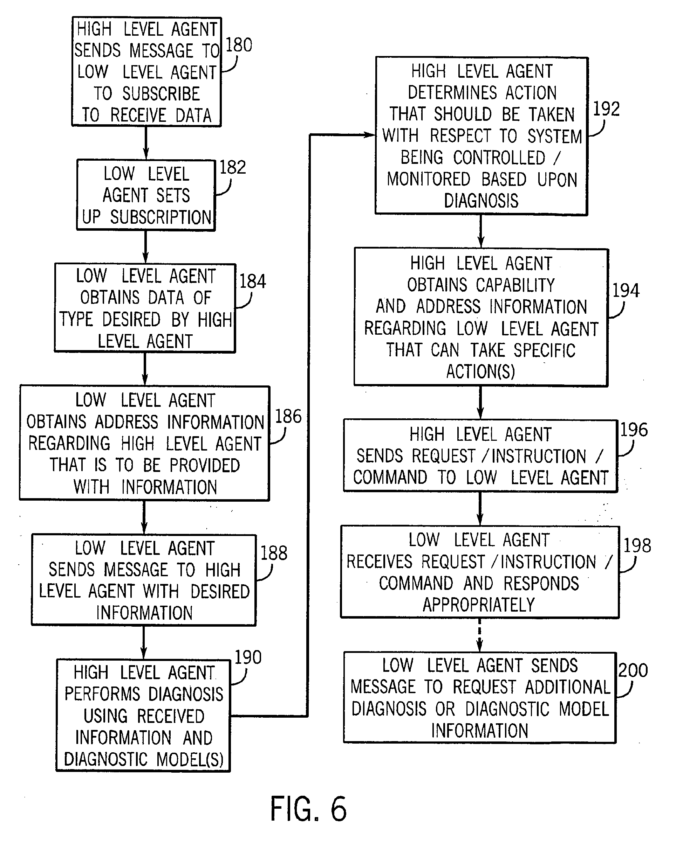

Depending upon the embodiment and the particular types of agents that are employed, the architectures and the capabilities and division of responsibilities among the different agents of the heterogeneous agent-based distributed control system 10 and manner of operation and inter-operation, of those agents can vary greatly. Turning to FIGS. 5 and 6, those FIGS. in particular show exemplary capabilities of the two types of agents 111j, 111k discussed above and an exemplary manner of interoperation of those different types of agents, when implemented in a heterogeneous agent-based distributed control system of the type shown in FIG 2(d). The exact types of agents employed to form such a hierarchically-arranged heterogeneous agent-based distributed control system could take a variety of forms. For example, in certain embodiments, the agents of the first type 111k or low-level agents (e.g., agents that are considered to interact directly with controlled elements) could be Rockwell type agents, while the agents of the second type 111 j or higher-level (e.g., the "managerial" agents) could be any one of Oak type agents, JADE type agents or Jack type agents among others.

Referring particularly to FIG 5, the capabilities of the different types of agents 111 j, 111 k could be as shown. With respect to the low-level agents 111 k, such agents could have low-level capabilities that included a register for data capability 170, a control load capability 172, and a set priority capability 174. These low-level agent capabilities would allow for control and monitoring of the machine 12 (e.g., physical machinery). As for the higher-level agents 111j, those agents could have high-level capabilities that included a get diagnosis capability 176 and a get diagnostic model capability 178. These high-level capabilities make it possible to assemble an overall system model from a plurality of local models and further make it possible to diagnose system faults through the use of the overall system model and, in certain embodiments, allow for forecasting, production planning, scheduling and diagnostics.

The exemplary agents of the first and second types 111j, 111k have responsibilities suited to their exemplary capabilities as discussed above, and could interact and interoperate in one exemplary embodiment as shown in FIG. 6. First, in a step 180, one of the high-level agents 111j could send a message to one or more of the low-level agents 111k to subscribe to receive particular data of interest that would allow the high-level agent to better manage the operation of the low-level agents. At a step 182, the low-level agent (or agents) 111k would then set up a subscription. Then, at a step 184, the low-level agent 111k at a particular time might obtain data of the type desired by the high-level agent 111j. At a step 186, upon receiving this data the low-level agent 111k in turn would obtain address information regarding the location of the high-level agent 111j that is to be provided with the information of interest. This address information could be obtained by way of one or more of the DFs 152 discussed above. Upon identifying the address of the high-level agent 111j that was interested in the information, the low-level agent 111k would send a message to the high-level agent that included the desired information, at a step 188.

Upon receiving the information of interest, at a step 190 the high-level agent 111j would in turn perform diagnosis using the received information and its own diagnostic model(s). At a step 192, the high-level agent 111k then would determine the action that should be taken with respect to the system being controlled/monitored, based upon its diagnosis. Upon making such determination, then at a step 194 the high-level agent 111j would obtain capability and address information regarding the low-level agent 111 k that could take the specific actions that the high-level agent determined to be necessary. Again, as in the case of step 186, the high-level agent 111j typically would access one or more of the DFs 152 to obtain this information.

Next, at a step 196, the high-level agent 111j would send a request/instruction/command (depending upon the exact relationship between the low-level and high-level agents) to the low-level agent 111 k that it had determined to be the appropriate recipient of this information. Then, at a step 198, the low-level agent 111 k would receive the request/instruction/command and respond appropriately. At a step 200, the low-level agent 111 k further could send additional messages to request additional diagnostic or diagnostic model information from the high-level agent 111j that sent the request/instruction/command or to other high-level agents. The steps 180-200 shown in FIG. 6 could then be repeated as necessary for the heterogeneous agent-based distributed control system 10 to continue functioning to continue controlling/monitoring the controlled system. Additionally, the steps of FIG. 6 could be performed among any number of pairs of different high-level and low-level agents of such a heterogeneous agent-based distributed control system 10.

It is specifically intended that the present invention not be limited to the embodiments and illustrations contained herein, but include modified forms of those embodiments including portions of the embodiments and combinations of elements of different embodiments as come within the scope of the following claims.

In summary the invention discloses a heterogeneous agent-based distributed control system for controlling a controlled system having a plurality of components. The heterogeneous agent-based distributed control system includes one or more agent of a first type and one or more agents of a second type that communicate with one another by way of one or more networks or other communication links. The agents of the first and second types differ from one another in terms of one or both of their respective architectures and their respective responsibilities. The agents interact with one another in a collaborative manner, and communicate through the use of a special, standardized communications protocol and through the use of certain special functional components.

## Claims

1. A heterogeneous agent-based distributed control system for controlling a control system having a plurality of components, the control system comprising:
at least one first agent of a first type;
at least one second agent of a second type;
a network linking the first and second agents;
wherein the first agent has a first responsibility and the second agent has a second responsibility; and
wherein the first and second agents collaborate with one another via communication over the network to control the controlled system.

2. The heterogeneous agent-based distributed control system of claim 1, wherein the first and second agents have different architectures in terms of at least one of their respective software programming, software components, firmware, hardware components, syntax, semantics, programming language, computing platform and operating system.

3. The heterogeneous agent-based distributed control system of claim 1 or 3, further comprising at least one third agent of a third type having a third responsibility,
wherein the first and second and third agents collaborate with one another via communication over the network to control the controlled system.

4. The heterogeneous agent-based distributed control system of claim 3, wherein each of the agents of the first, second and third types is selected from the group consisting of: a Rockwell type agent, a JADE type agent, a Jack type agent, an April type agent, an ABLE type agent, and an other type of agent, and wherein each of the agents deploys a common language and distributed capabilities.

5. The heterogeneous agent-based distributed control system of one of claims 1 to 4,
wherein the first agent is one of a first plurality of agents of the first type, the second agent is one of a second plurality of agents of the second type, and the first and second pluralities of agents are respectively responsible for controlling first and second geographically-distinct portions of the controlled system.

6. The heterogeneous agent-based distributed control system of one of claims 1 to 5,
wherein the first and second agents differ by controlling first and second functions of the controlled system or controlling aspects of the controlled system during first and second time periods or having different response rates.

7. The heterogeneous agent-based distributed control system of one of claims 1 to 6,
wherein the first agent is one of a first plurality of agents of the first type, and wherein the agents of the first type have responsibilities associated with a first level in a hierarchy of agent responsibilities, and the second responsibility of the second agents is associated with a second level in the hierarchy of agent responsibilities.

8. The heterogeneous agent-based distributed control system of one of claims 1 to 7,
wherein the first agent is a member of a first responsibility grouping and a second responsibility grouping and including a third agent that is an additional member of the first responsibility grouping but not of the second responsibility grouping, and wherein the first and third agents both contribute to controlling a particular component of the controlled system.

9. The heterogeneous agent-based distributed control system of one of claims 1 to8,
wherein the first and second agents communicate by way of the network in accordance with a shared, Ethernet/IP network protocol.

10. The heterogeneous agent-based distributed control system of one of claims 1 to 9,
wherein each of the agents employs a same communication transport stack.

11. The heterogeneous agent-based distributed control system of claim 10, wherein the transport stack is based upon the Common Industrial Protocol (CIP).

12. The heterogeneous agent-based distributed control system of claim 11, wherein the transport stack of each of the agents of the first and second types includes a respective library of messages that are written in at least one of the JAVA language and the C++ language.

13. The heterogeneous agent-based distributed control system of one of claims 1 to 12,
wherein messages transmitted among the first and second agents are formatted in accordance with at least one of JDL, XML, KQML and HTML protocol information.

14. The heterogeneous agent-based distributed control system of one of claims 1 to 12,
wherein messages transmitted among the first and second agents are formatted in accordance with FIPA ACL protocol information,

15. The heterogeneous agent-based distributed control system of one of claims 1 to 14,
wherein each of the first and second agents at least one of includes and interacts with at least one directory facilitator.

16. The heterogeneous agent-based distributed control system of claim 15, wherein the first agent is one of a first plurality of agents of the first type, the second agent is one of a second plurality of agents of the second type, and the agents at least one of include and interact with a plurality of local directory facilitators and at least one global directory facilitator.

17. The heterogeneous agent-based distributed control system of claim 15 or 16, wherein at least one directory facilitators is equipped with both agent address information and agent capability information.

18. The heterogeneous agent-based distributed control system of claim 15, 16 or 17,
wherein the directory facilitators communicate with one another by at least one of breadth propagation, depth propagation, no-knowledge propagation and a heart-beating signal.

19. The heterogeneous agent-based distributed control system of one of claims 1 to 18,
wherein each of the agents is equipped to provide agent management services.

20. The heterogeneous agent-based distributed control system of one of claims 1 to 19,
wherein the first agent is one of a first plurality of agents, the first responsibility is one of a first plurality of responsibilities of the first plurality of agents, wherein the first plurality of responsibilities relate to low-level control of the controlled system while the second responsibility relates to at least one of management of the first plurality of agents and diagnoses concerning the controlled system.

21. The heterogeneous agent-based distributed control system of claim 20, wherein the first plurality of responsibilities relate to data registration, load controlling and priority setting functions, and the second responsibility relates to at least one of obtaining and providing diagnosis information and at least one of obtaining and providing diagnostic model information.

22. The heterogeneous agent-based distributed control system of claim 17, wherein at least one of the agents of the second type includes a dynamic model management capability by which the at least one agent is capable of assembling an overall system model from a plurality of local models and further able to diagnose system faults by using the overall system model.

23. The heterogeneous agent-based distributed control system of one of claims 1 to 22,
wherein the agent of the first type is implemented on a programmable logic controller and the controlled system is an industrial system.

24. The heterogeneous agent-based distributed control system of one of claims 1 to 23,
wherein the first and second agents further collaborate with one another via communication over the network to diagnose the controlled system or perform at least one prognosis in relation to the controlled system.

25. A method of intercommunicating messages between a first agent of a first type and a second agent of a second type, the method comprising:
developing a first message at the first agent of the first type, wherein the first message is formatted in accordance with first protocol information including at least one of JDL protocol information and FIPA ACL protocol information;
further formatting the first message at the first agent with transport-layer protocol information;
additionally formatting the first message for communication over a network to include network protocol information;
sending the first message over the network to the second agent;
receiving the first message at the second agent;
processing the first message at the second agent, wherein the processing of the first messages includes removal of the network protocol information, the transport-layer protocol information, and the first protocol information.

26. The method of claim 25, wherein the transport-layer protocol information includes Common Industrial Protocol (CIP) information.

27. The method of claim 25 or 26, wherein the network protocol information includes Ethernet/IP protocol information.

28. The method of claim 25, 26 or 27, wherein one of the first and second agents is a Rockwell type agent, and the other of the first and second agents is selected from the group consisting of a JADE type agent, a Jack type agent, an April type agent, an ABLE type agent, and an additional type of agent.
